## Europäisches Patentamt

## European Patent Office

## Office européen des brevets

(19)

(11) Veröffentlichungsnummer: **0 453 838 B1**

(12)

# EUROPÄISCHE PATENTSCHRIFT

(45) Veröffentlichungstag der Patentschrift: **21.06.95**

(21) Anmeldenummer: **91105396.5**

(22) Anmeldetag: **05.04.91**

(51) Int. Cl.6: **C08J 3/03**, C08L 75/16, C08G 18/67, C09D 175/16, C08F 299/06, C08G 18/34, C08G 18/08

(54) **Verwendung von wässrigen Lösungen oder Dispersionen von (Meth)- Acryloylgruppen aufweisenden Oligourethanen zur Herstellung von Beschichtungsmitteln und hierzu geeignete wässrige Lösungen oder Dispersionen.**

(30) Priorität: **18.04.90 DE 4012339**

(43) Veröffentlichungstag der Anmeldung:
**30.10.91 Patentblatt 91/44**

(45) Bekanntmachung des Hinweises auf die Patenterteilung:
**21.06.95 Patentblatt 95/25**

(84) Benannte Vertragsstaaten:
**AT BE CH DE ES FR GB IT LI NL SE**

(56) Entgegenhaltungen:
**EP-A- 0 098 752**
**EP-A- 0 183 119**

(73) Patentinhaber: **BAYER AG**

**D-51368 Leverkusen (DE)**

(72) Erfinder: **Meixner, Jürgen, Dr.**
**Josef-Brocker-Dyk 56**
**W-4150 Krefeld 1 (DE)**
Erfinder: **Kremer, Wolfgang**
**Lilienweg 6**
**W-4173 Kerken 2 (DE)**
Erfinder: **Müller, Manfred**
**Friedrich Gelsamstrasse 34**
**W-5140 Erkelenz (DE)**
Erfinder: **Casselmann, Holger, Dr.**
**Töpferweg 36**
**W-5060 Bergisch Gladbach 2 (DE)**
Erfinder: **Hoehne, Klaus, Dr.**
**Elisabeth-Langgässerstrasse 39**
**W-5090 Leverkusen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft die Verwendung von wäßrigen Lösungen oder Dispersionen von (Meth)-Acryloylgruppen aufweisenden Oligourethanen als oder zur Herstellung von radikalisch härtbaren, wäßrigen Beschichtungsmitteln und für diese Verwendung geeignete wäßrige Lösungen oder Dispersionen.

(Meth)Acryloylgruppen aufweisende Polyurethane (sogenannte Urethan(meth)acrylate) sind seit langem bekannt und als Bindemittel für z.B. Lacke sehr gut geeignet (vgl. z.B. DE-OS 2 737 406). Die relativ hohe Viskosität dieser Produkte erfordert praktisch immer die Mitverwendung von organischen Lösungsmitteln.

Auch wasserverdünnbare Urethan(meth)acrylate sind bekannt (vgl. z.B. DE-OS 2 936 039). Die Hydrophilie dieser bekannten Systeme basiert auf der Anwesenheit von ionischen Zentren, insbesondere von Sulfonatgruppen, die als Gegenionen Alkalikationen oder Ammoniumionen (aus tert. Aminen) aufweisen, die in den aus den Systemen letztendlich erhaltenen Überzügen wenigstens zum Teil verbleiben und deren Wasserresistenz erheblich beeinträchtigen.

Es war daher die der Erfindung zugrundeliegende Aufgabe, neue wäßrige Lösungen oder Dispersionen von Urethan(meth)acrylaten zur Verfügung zu stellen, die ohne Zusatz von Dispergiermittel, ohne Alkalikationen und ohne Ammoniumionen aus tert. Aminen lagerstabil sind und zu wasser- und chemikalienfesten Überzügen mit guten mechanischen Eigenschaften ausgehärtet werden können.

Diese Aufgabe konnte mit der Bereitstellung der nachstehend näher beschriebenen erfindungsgemäßen Lösungen oder Dispersionen bzw. des Verfahrens zu ihrer Herstellung gelöst werden. Der erfindungswesentliche Punkt besteht darin, in die Urethan(meth)acrylate unter Verwendung von 2,2-Bis(hydroxymethyl)-alkancarbonsäuren Carboxylgruppen einzubauen, die zumindest teilweise mit Ammoniak neutralisiert werden.

Die DE-OS 3 641 494 betrifft ein ähnliches Verfahren, bei welchem in Wasser dispergierbare Polyurethanelastomere in analoger Weise anionisch modifiziert werden. Es kann dennoch gesagt werden, daß die erfindungsgemäße Lösung der gestellten Aufgabe im Hinblick auf diese Vorveröffentlichung nicht naheliegend war, da sich die nachstehend näher beschriebenen erfindungsgemäßen Oligourethane bzw. ihre Lösungen oder Dispersionen in mehreren wesentlichen Punkten von den Polyurethanen der Entgegenhaltung bzw. deren Lösungen bzw. Dispersionen unterscheiden:

- Bei den Polyurethanen der Vorveröffentlichung handelte es sich um Polyurethanelastomere, deren Moleküle im wesentlichen aus Struktureinheiten bestehen, die auf den Einbau von höhermolekularen Verbindungen mit mindestens zwei gegenüber Isocyanatgruppen reaktionsfähigen Gruppen, insbesondere Hydroxylgruppen, zurückzuführen sind. In den erfindungsgemäßen Oligourethanen liegen keine derartigen Struktureinheiten vor.
- Die Polyurethane der Vorveröffentlichung enthalten als weitere hydrophile Zentren end- oder seitenständig angeordnete, Ethylenoxideinheiten aufweisende Polyetherketten, die ebenfalls in den erfindungsgemäßen Oligourethanen nicht vorliegen.
- In den erfindungsgemäßen Oligourethanen liegen neben den Ammoniumcarboxylatgruppen gleichzeitig (Meth)Acryloylgruppen in erheblicher Konzentration vor, was bei den Polyurethanen der Vorveröffentlichung nicht der Fall ist. Es konnte nicht erwartet werden, daß es möglich sein würde, lagerstabile wäßrige Lösungen oder Dispersionen von Oligourethanen herzustellen, in denen gleichzeitig (Meth)-Acryloylgruppen und Ammoniak in Form von Ammoniumgruppen in jeweils beträchtlicher Konzentration vorliegen, da bekannt ist, daß Ammoniak wie auch primäre oder sekundäre Amine spontan mit aktivierten Doppelbindungen im Sinne einer Michael-Addition reagieren. Der Fachmann konnte daher nicht erwarten, daß das Prinzip der ionischen Modifizierung gemäß DE-OS 3 641 494 auf (Meth)-Acryloylgruppen aufweisende Oligourethane der in den erfindungsgemäßen Lösungen oder Dispersionen vorliegenden Art übertragbar sein würde.

Die EP-A-0 098 752 beschreibt schließlich die Herstellung von wäßrigen Dispersionen von hochmolekularen Polyurethanen, bei welchem ionisch modifizierte Oligourethane auf Basis von Polyether- bzw. Polyesterpolyolen mit endständigen (Meth)Acryloylgruppen in wäßriger Phase einer kettenverlängernden Polymerisationsreaktion unterzogen werden. Im Text wird als mögliches Neutralisationsmittel beiläufig auch Ammoniumhydroxid genannt, jedoch wird dieses gegenüber Acryloylgruppen reaktive Neutralisationsmittel in keinem einzigen Ausführungsbeispiel eingesetzt. Die Oligourethane dieser Vorveröffentlichung werden unter Mitverwendung von höhermolekularen Polyester- bzw. Polyetherpolyolen hergestellt, und weisen demzufolge auch eine wesentlich geringere Konzentration an olefinischen Doppelbindungen auf. Die Herstellung von (Meth)Acryloylgruppen aufweisenden Oligourethanen mit mit Ammoniak neutralisierten Carboxylgruppen und einer hohen Konzentration an aktivierten Doppelbindungen bzw. ihre Verwendung zur Herstellung von (auf dem Substrat) radikalisch härtbaren, wäßrigen Beschichtungsmitteln wird in der Vorveröffentlichung mit keinem Wort erwähnt bzw. nahegelegt.

Gegenstand der Erfindung ist die Verwendung von wäßrigen Lösungen oder Dispersionen von (Meth)-Acryloylgruppen aufweisenden Oligourethanen, die

i) einen Doppelbindungsgehalt in Form von (Meth)Acryloylgruppen, berechnet als = C = C = (Molekulargewicht = 24), von 3 bis 15 Gew.-% und

ii) bei einem pH-Wert der wäßrigen Lösungen oder Dispersionen von 6,0 bis 8,5 einen Gehalt an zumindest teilweise mit Ammoniak neutralisiert vorliegenden Carboxylgruppen, der einer Säurezahl der Oligourethane von 20 bis 100 entspricht,

aufweisen, als oder zur Herstellung von radikalisch härtbaren, wäßrigen Beschichtungsmitteln.

Gegenstand der Erfindung sind auch zu dieser Verwendung geeignete wäßrige Lösungen oder Dispersionen von (Meth)Acryloylgruppen aufweisenden Oligourethanen, dadurch gekennzeichnet, daß sie hergestellt worden sind indem man

a) 20 bis 80 Gew.-% einer (Meth)Acryloylgruppen aufweisenden Alkoholkomponente, bestehend aus mindestens einem (Meth)Acryloylgruppen aufweisenden einwertigen Alkohols des Molekulargewichtsbereichs 116 bis 1.000,

b) 4,5 bis 20 Gew.-% einer 2,2-Bis(hydroxymethyl)alkancarbonsäure mit mindestens 5 Kohlenstoffatomen und

c) 15 bis 75 Gew.-% einer Polyisocyanatkomponente, bestehend aus mindestens einem organischen Polyisocyanat des Molekulargewichtsbereichs 168 bis 1.000,

in einer Eintopfreaktion, gegebenenfalls in Gegenwart eines inerten organischen Lösungsmittels, dergestalt zur Reaktion bringt, daß man die Komponenten a) und b) vorlegt, gegebenenfalls unter Zusatz eines inerten organischen Lösungsmittels homogenisiert und, gegebenenfalls unter Zusatz eines geeigneten Katalysators, bei Temperaturen von 50 bis 100°C mit der Komponente c) zur Reaktion bringt, bis das Reaktionsgemisch keine freien Isocyanatgruppen mehr enthält anschließend das Reaktionsgemisch in Wasser löst oder dispergiert, wobei während des Löse- bzw. Dispergiervorgangs die Carboxylgruppen durch Zugabe von Ammoniak zumindest teilweise neutralisiert werden, so daß die resultierende Lösung oder Dispersion einen pH-Wert von 6,0 bis 8,5 aufweist, mit der Maßgabe, daß sich die genannten Prozentsätze zu 100 ergänzen, daß das Mengenverhältnis der zum Einsatz gelangenden Reaktionspartner a), b) und c) einem NCO/OH-Äquivalentverhältnis von 0,5:1 bis 1:1 entspricht und im übrigen innerhalb der gemachten Angaben so gewählt wird, daß die resultierenden Oligourethane den oben genannten Gehalt an Gruppierungen (i) und (ii) aufweisen.

(Meth)Acrylsäure wie z.B. das Reaktionsprodukt aus 2 Mol Acrylsäure und 1 Mol eines oxethylierten Trimethylolpropans (OH-Zahl 550, Oxethylierungsgrad ca. 4).

Bei der Komponente b) handelt es sich um mindestens eine 2,2-Bis(hydroxymethyl)alkancarbonsäure mit insgesamt mindestens 5 Kohlenstoffatomen, vorzugsweise 2,2-Bis(hydroxymethyl)propionsäure.

Die Komponente c) besteht aus mindestens einem organischen Polyisocyanat. Geeignete Polyisocyanate sind beliebige, aus der Polyurethanchemie an sich bekannte organische Polyisocyanate mit aliphatisch, cycloaliphatisch und/oder aromatisch gebundenen Isocyanatgruppen, die vorzugsweise ein Molekulargewicht von 168 bis 1.000, vorzugsweise von 168 bis 300, aufweisen. Geeignet sind beispielsweise 1-Isocyanato-3,3,5-trimethyl-5-isocyanatomethyl-cyclohexan (IPDI), 4,4'-Diisocyanato-dicyclohexylmethan, 4,4'-Diisocyanatodiphenylmethan, dessen technischen Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol.

Geeignet sind auch Biuret-, Isocyanurat- oder Urethan-modifizierte Polyisocyanate auf Basis dieser einfachen Polyisocyanate. Diese Derivate weisen im allgemeinen ein bis zu 1.000 liegendes Molekulargewicht auf. Die Herstellung derartiger Derivate ist beispielsweise in US-PS 3 124 604, US-PS 3 183 112, US-PS 3 919 218 oder US-PS 4 324 879 beschrieben.

Die in den erfindungsgemäßen Lösungen oder Dispersionen vorliegenden Oligourethane weisen den bereits obengenannten Gehalt an olefinischen Doppelbindungen auf. Vorzugsweise liegt dieser Gehalt bei 4 bis 10 Gew.-%. Die Säurezahl der Oligourethane liegt bei 20 bis 100, vorzugsweise bei 25 bis 80 mgKOH/g, wobei die Säurezahl sowohl die freien als auch die mit Ammoniak neutralisiert vorliegenden Carboxylgruppen umfaßt. Die Carboxylgruppen liegen zumindest teilweise, vorzugsweise zu 45 bis 100, insbesondere zu 60 bis 100 % in mit Ammoniak neutralisierter Form, d.h. als Carboxylatgruppen vor. Gleichzeitig wird bei der Neutralisation der Carboxylgruppen darauf geachtet, daß der pH-Wert der wäßrigen Lösungen oder Dispersionen bei 6,0 bis 8,5, vorzugsweise 6,5 bis 8,0, liegt. Der Festkörpergehalt der erfindungsgemäßen Lösungen oder Dispersionen liegt im allgemeinen bei 30 bis 55, vorzugsweise bei 35 bis 50 Gew.-%.

Bei den erfindungsgemäßen Oligourethanen handelt es sich um Umsetzungsprodukte von vergleichsweise niedermolekuren Ausgangsmaterialien, wobei hohe Mengen an kettenabbrechend wirkenden Aufbaukomponenten mitverwendet werden. Es ist daher gerechtfertigt, nicht von "Polyurethanen", sondern

EP 0 453 838 B1

vielmehr von "Oligourethanen" zu sprechen, deren aus der Stöchiometrie der Ausgangsmaterialien errechenbares mittleres Molekulargewicht bei 700 bis 5.000, vorzugsweise 700 bis 2.000, liegt.

Bei der Herstellung der erfindungsgemäßen Oligourethane werden vorzugsweise 25 bis 75 Gew.-% der Komponente a), 5 bis 19 Gew.-% der Komponente b) und 20 bis 70 Gew.-% der Komponente c) eingesetzt, wobei sich auch bei dieser bevorzugten Arbeitsweise die genannten Prozentangaben zu 100 ergänzen. Außerdem wird bei der Durchführung des erfindungsgemäßen Verfahrens darauf geachtet, daß die Ausgangskomponenten innerhalb der genannten Grenzen unter Einhaltung eines NCO/OH-Äquivalentverhältnisses von 0,5:1 bis 1:1, vorzugsweise 0,7:1 bis 1:1, zum Einsatz gelangen. Im allgemeinen wird ein geringfügiger Unterschuß an Polyisocyanat c) eingesetzt, so daß das Ende der Umsetzung dann erreicht ist, wenn im Reaktionsgemisch keine Isocyanatgruppen mehr nachweisbar sind. Schließlich wird bei der Durchführung des erfindungsgemäßen Verfahrens durch geeignete Wahl von Art und Mengenverhältnissen der genannten Reaktionspartner innerhalb der genannten Bereiche darauf geachtet, daß Oligourethane mit den genannten Kenndaten resultieren.

Die erfindungsgemäße Umsetzung wird vorzugsweise in Gegenwart von inerten Lösungsmitteln bei Festgehalten von 60 bis 95 Gew.-% durchgeführt. Geeignete Lösungsmittel sind beispielsweise Dimethyldiglykol, N-Methylpyrrolidon, N-Methylcaprolacton, Ethylglykolacetat, n-Butylacetat, Aceton bzw. Gemische derartiger Lösemittel.

Zur Durchführung der Umsetzung werden die (Meth)Acryloylgruppen aufweisende Alkoholkomponente a), die 2,2-Bis(hydroxymethyl)alkancarbonsäure b) und das vorzugsweise mitverwendete Lösungsmittel homogenisiert, dann bei 50 bis 100°C das Polyisocyanat c) innerhalb eines Zeitraumes von 1 Minute bis zu 2 Stunden zugegeben und das Reaktionsgemisch unter Ausnutzung der exothermen Reaktion solange bei 60 bis 100°C gerührt, bis ein Harz mit den genannten Kenndaten resultiert Vorzugsweise erfolgt die Umsetzung in Gegenwart von Sauerstoff, d.h. beispielsweise unter Durchleiten von Luft.

Zur Beschleunigung der Reaktion können geeignete Katalysatoren wie z.B. Dibutylzinnoxid, Dibutylzinndilaurat, Triethylamin in Mengen von 0,01 bis 2,5 Gew.-%, bezogen auf das Gewicht des gesamten Reaktionsansatzes, zugesetzt werden.

Das Reaktionsprodukt kann durch Zugabe geeigneter Inhibitoren und Antioxidantien von je 0,001 bis 0,3 Gew.-%, bezogen auf Gesamtmischung, vor vorzeitiger und unerwünschter Polymerisation geschützt werden.

Werden besonders hohe Anforderungen an den Restgehalt organischer Lösemittel gestellt, so kann ein Teil des Lösemittels vor und/oder während und/oder nach der Neutralisation bzw. dem Lösen oder Dispergieren des Harzes in Wasser destillativ abgetrennt werden. Eine destillative Abtrennung von Lösemitteln aus der Lösung oder Dispersion ist dabei nur bei solchen Lösemitteln sinnvoll, die mit Wasser ein Azeotrop bilden.

Nach der Urethanisierungsreaktion können zur Erzielung bestimmter Eigenschaften auch geringe Mengen anderer organischer Lösemittel wie z.B. Ethanol, n-Propanol, iso-Propanol, n-Butanol, tert.-Butanol, Pentanol, Hexanol, Octanol, Butylglykol, Ethylglykol, Butyldiglykol, Ethyldiglykol, Methyldiglykol, Methoxypropanol zugesetzt werden.

Die vorzugsweise in Form von 60- bis 95-gew.-%igen Lösungen in organischen Lösungsmitteln anfallenden Umsetzungsprodukte werden in Form dieser Lösungen in einem Gemisch aus Wasser und Ammoniak gelöst bzw. dispergiert, wobei das Ammoniak, wie bereits ausgeführt, vorzugsweise in einer solchen Menge eingesetzt wird, daß 45 bis 100, vorzugsweise 60 bis 100 %, der Carboxylgruppen neutralisiert werden, wobei gleichzeitig darauf zu achten ist, daß der pH-Wert der entstehenden Lösung oder Dispersion bei 6,0 bis 8,5, insbesondere 6,5 bis 8,0, liegt. Die Wassermenge wird so bemessen, daß ein Feststoffgehalt innerhalb der bereits obengenannten Bereiche resultiert.

Die auf diese Weise erhaltenen wäßrigen Dispersionen oder Lösungen stellen wertvolle wäßrige Bindemittel für Überzugsmittel dar. Sie können als solche oder in Kombination mit den aus der Lacktechnologie bekanten Hilfs- und Zusatzmittel wie z.B. Füllstoffen, Pigmenten, Lösungsmitteln, Verlaufshilfsmitteln u. dgl. zur Herstellung von Beschichtungen auf beliebigen Substraten verwendet werden.

Geeignete Substrate sind Papier, Kartonage, Leder, Holz, Kunststoffe, Vlies, Textilien, keramische Materialien, mineralische Materialien, Glas, Metall, Kunstleder, fotografische Materialien wie z.B. mit fotografischer Schicht versehenes Papier.

Der Auftrag der Beschichtungsmittel kann auf bekannte Weise durch Spritzen, Rakeln, Walzen, Streichen, Tauchen oder Gießen erfolgen. Nach Verdunsten des Wassers sowie gegebenenfalls mitverwendeten inerten Lösungsmitteln kann die Vernetzung der Überzüge entweder mittels energiereicher Strahlung, wie UV-Licht, Elektronen- oder Gammastrahlen oder durch Härtung mit Metallsalzen von Sikkativsäuren und (Hydro)-Peroxiden oder mit Metallsalzen von Sikkativsäuren oder mit (Hydro)-Peroxiden alleine bei Temperaturen zwischen 80°C und 250°C erfolgen. Bei Temperaturen über 150°C kann oft auch auf Zugabe von

4

(Hydro)-Peroxiden und/oder Metallsalzen verzichtet werden.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in der Monographie von J. Korsar, Light-Sensitive Systems, J. Wiley & Sons, New York - London - Sydney 1965, beschrieben sind.

Weiterhin gut geeignet sind Benzoinether wie Benzoinisopropylether, Benzilketale, wie z.B. Benzildimethylketal und Hydroxyalkylphenone, wie z.B. 2-Hydroxy-2-metyl-1-phenylpropan-1-on.

Die erwähnten Fotoinitiatoren, die je nach Verwendungszweck der erfindungsgemäßen Massen in Mengen zwischen 0,1 und 10 Gew.-%, vorzugsweise 0,1 bis 5 Gew.-%, bezogen auf das Gewicht der dispergiert vorliegenden Reaktionsprodukte, eingesetzt werden, können als einzelne Substanz oder, wegen häufiger vorteilhafter synergistischer Effekte, auch in Kombination miteinander verwendet werden.

Die gegebenenfalls eingesetzten Sikkative sind z.B. Cobalt-, Blei- oder Mangansalze von Säuren wie Leinölfettsäure, Tallölfettsäuren, Sojaölfettsäuren, von Harzsäuren, wie Abietinsäure und Naphthensäure oder von Essigsäure und Isooctansäure. Sie werden, falls überhaupt, in Form von organischen Lösungen in solchen Mengen eingesetzt, daß der Metallgehalt, bezogen auf das Gewicht der dispergiert vorliegenden hydrophilen und hydrophoben Polyurethane 0,001 bis 1 Gew.-% entspricht.

Als (Hydro)-Peroxide seien beispielhaft genannt: Dicumylperoxid, Di-tert.-butylperoxid, Benzoylperoxid, Cyclohexanonperoxid, Methylethylketonperoxid, Acetylacetonperoxid, Dinonylperoxid, Bis-(4-tert.-butylcyclohexyl)-peroxydicarbonat, tert.-Butylhydroperoxid, 2,5-Dimethylhexan-2,5-hydroperoxid, Diisopropyl-benzolmonohydroperoxid und Wasserstoffperoxid. Vorzugsweise werden diese (Hydro)-Peroxide in Mengen von 1 bis 10 Gew.-%, bezogen auf das Gewicht der dispergiert oder gelöst vorliegenden Oligourethane eingesetzt.

In den nachfolgenden Beispielen beziehen sich alle Prozentangaben auf Gewichtsprozente.

Beispiele

Die in Tabelle 1 genannten Mengen an Komponenten a) und b) werden zusammen mit 0,2 % Zinndioctoat und 0,1 % 2,6-Di-t.-butyl-p-kresol in Butylacetat (siehe Tabelle 1) gelöst und unter Durchleiten von Luft auf 60°C erwärmt. Dann wird die in Tabelle 1 genannte Menge an Komponente c) zugetropft. Nach 1 Stunde wird die Temperatur auf 80°C erhöht und die Mischung bei dieser Temperatur gehalten, bis der NCO-Gehalt auf kleiner 0,1 % gefallen ist.

Die so erhaltene Lösung eines (Meth)Acryloylgruppen aufweisenden Oligourethans wird dann mit soviel einer Lösung von Ammoniak in Wasser versetzt, daß ein Festgehalt von 50 % resultiert Dabei wird soviel Ammoniak zugesetzt, daß der Neutralisationsgrad, bezogen auf die eingesetzte Dimethylolpropionsäure bei 80 % liegt. Anschließend wird soviel einer Lösung von Ammoniak in Wasser zugegeben, daß der pH-Wert der entstehenden wäßrigen Dispersion oder Lösung bei ca. 7 liegt. Die entstandenen Festgehalte und pH-Werte sind in Tabelle 1 angegeben.

## Tabelle 1

| Einwaage (%) | Beispiele 1 | 2 | 3 | 4 | 5 | 6 |
|---|---|---|---|---|---|---|
| **Komponente a** | | | | | | |
| Hydroxyethylacrylat | 26,8 | 7,0 | | | | 31,0 |
| Hydroxyethylmethacrylat | | | | | 33,3 | |
| 1,4-Butandiolmonoacrylat | | 50,0 | 63,4 | 67,6 | | |
| 4-fach ethoxyliertes Tri-methylolpropandiacrylat | | | | | | |
| **Komponente b** | | | | | | |
| Dimethylolpropionsäure | 7,7 | 10,0 | 8,5 | 9,0 | 15,5 | 16,0 |
| **Komponente c** | | | | | | |
| Isophorondiisocyanat | | 33,0 | 28,1 | | 51,2 | 53,0 |
| Toluylen-2,4-diisocyanat | | | | 23,4 | | |
| Trimerisiertes 1,6-Diisocyanatohexan | 65,5 | | | | | |
| Butylacetat | 25,0 | 11,1 | 11,1 | 11,1 | 11,1 | 25,0 |
| **Säurezahl (mg/KOH/g) des entstandenen Produktes** | 36 | 32 | 33 | 37 | 39 | 34 |
| **Festgehalt der wäßrigen Dispersion (%)** | 40 | 42 | 45 | 37 | 43 | 46 |
| **pH-Wert der wäßrigen Dispersion** | 7,0 | 7,3 | 7,0 | 7,5 | 7,9 | 7,0 |

Verwendungsbeispiele

a) Fotochemische Härtung:

Die Produkte der Beispiele 1, 2, 3 und 4 wurden vor Zugabe ammoniakalischen Wassers jeweils mit 5 % 2-Hydroxy-2-methyl-1-phenyl-propan-1-on versetzt.

Die wäßrigen Dispersionen wurden dann mit einer Naßfilmstärke von 60 $\mu$m auf eine Glasplatte aufgebracht. Die Aushärtung erfolgte nach Abdunsten des Wasers unter 2 IST-Strahlern (Impuls-Strahler der Fa. Strahlentechnik Hildebrand, Werner und Pfleiderer, Leistung 80 Watt/cm, Strahlerabstand 20 cm) und 14 m/Min. Verarbeitungsgeschwindigkeit.

Es entstanden klare, kratzfeste, wasser- und chemikalienbeständige Überzüge mit hoher Härte (Pendeldämpfung nach König, DIN 53 157: ca. 200 sec.)

6

Die Prüfung der Kratzfestigkeit erfolgte mit dem Fingernagel; die Prüfung der Wasser- und Chemikalienbeständigkeit erfolgte durch Auflage von Wattbäuschen getränkt mit:

- Wasser (16 Stunden)
- Ethanol, 50 %ig (1 Stunde)
- Reinigungsmittel (1 Stunde)
- Aceton (10 Sekunden)

b) Thermische Härtung:

Die wäßrigen Dispersionen der Beispiele 2, 3, 5 und 6 wurden mit einer Naßfilmstärke von 60 $\mu$m auf eine Glasplatte aufgebracht und 30 Min. bei 180°C gehärtet. Es entstanden klare, harte, kratz- und wasserfeste Überzüge.

**Patentansprüche**

1. Verwendung von wäßrigen Lösungen oder Dispersionen von (Meth)Acryloylgruppen aufweisenden Oligourethanen, die

   i) einen Doppelbindungsgehalt in Form von (Meth)Acryloylgruppen, berechnet als =C=C= (Molekulargewicht = 24), von 3 bis 15 Gew.-% und

   ii) bei einem pH-Wert der wäßrigen Lösungen oder Dispersionen von 6,0 bis 8,5 einen Gehalt an zumindest teilweise mit Ammoniak neutralisiert vorliegenden Carboxylgruppen, der einer Säurezahl der Oligourethane von 20 bis 100 entspricht,

   aufweisen, als oder zur Herstellung von radikalisch härtbaren, wäßrigen Beschichtungsmitteln.

2. Zur Verwendung gemäß Anspruch 1 geeignete wäßrige Lösungen oder Dispersionen von (Meth)-Acryloylgruppen aufweisenden Oligourethanen, dadurch gekennzeichnet, daß sie hergestellt worden sind indem man

   a) 20 bis 80 Gew.-% einer (Meth)Acryloylgruppen aufweisenden Alkoholkomponente, bestehend aus mindestens einem (Meth)Acryloylgruppen aufweisenden einwertigen Alkohols des Molekulargewichtsbereichs 116 bis 1.000,

   b) 4,5 bis 20 Gew.-% einer 2,2-Bis(hydroxymethyl)alkancarbonsäure mit mindestens 5 Kohlenstoffatomen und

   c) 15 bis 75 Gew.-% einer Polyisocyanatkomponente, bestehend aus mindestens einem organischen Polyisocyanat des Molekulargewichtsbereichs 168 bis 1.000,

   in einer Eintopfreaktion, gegebenenfalls in Gegenwart eines inerten organischen Lösungsmittels, dergestalt zur Reaktion bringt, daß man die Komponenten a) und b) vorlegt, gegebenenfalls unter Zusatz eines inerten organischen Lösungsmittels homogenisiert und, gegebenenfalls unter Zusatz eines geeigneten Katalysators, bei Temperaturen von 50 bis 100°C mit der Komponente c) zur Reaktion bringt, bis das Reaktionsgemisch keine freien Isocyanatgruppen mehr enthält, anschließend das Reaktionsgemisch in Wasser löst oder dispergiert, wobei während des Löse- bzw. Dispergiervorgangs die Carboxylgruppen durch Zugabe von Ammoniak zumindest teilweise neutralisiert werden, so daß die resultierende Lösung oder Dispersion einen pH-Wert von 6,0 bis 8,5 aufweist, mit der Maßgabe, daß sich die genannten Prozentsätze zu 100 ergänzen, daß das Mengenverhältnis der zum Einsatz gelangenden Reaktionspartner a), b) und c) einem NCO/OH-Äquivalentverhältnis von 0,5:1 bis 1:1 entspricht und im übrigen innerhalb der gemachten Angaben so gewählt wird, daß die resultierenden Oligourethane den in Anspruch 1 genannten Gehalt an Gruppierungen (i) und (ii) aufweisen.

**Claims**

1. The use of aqueous solutions or dispersions of oligourethanes containing (meth)acryloyl groups which

   i) have a double bond content in the form of (meth)acryloyl groups, expressed as =C=C= (molecular weight = 24), of 3 to 15% by weight and

   ii) at a pH value of the aqueous solutions or dispersions of 6.0 to 8.5, have a content of carboxyl groups at least partly neutralized with ammonia which corresponds to an acid value of the oligourethanes of 20 to 100,

   as or for the production of radically curable water-based coating compositions.

**2.** Aqueous solutions or dispersions of oligourethanes containing (meth)acryloyl groups suitable for the use claimed in claim 1, characterized in that they have been obtained by reacting

a) 20 to 80% by weight of an alcohol component containing (meth)acryloyl groups consisting of at least one monohydric alcohol containing (meth)acryloyl groups and having a molecular weight of 116 to 1,000,

b) 4.5 to 20% by weight of a 2,2-bis-(hydroxymethyl)-alkane carboxylic acid containing at least 5 carbon atoms and

c) 15 to 75% by weight of a polyisocyanate component consisting of at least one organic polyisocyanate having a molecular weight in the range from 168 to 1,000,

in a one-pot reaction, optionally in the presence of an inert organic solvent, by initially introducing components a) and b), optionally homogenizing them with addition of an inert organic solvent and then reacting the mixture with component c) at temperatures of 50 to 100°C, optionally with addition of a suitable catalyst, until the reaction mixture contains no more free isocyanate groups and subsequently dissolving or dispersing the reaction mixture in water, the carboxyl groups being at least partly neutralized by addition of ammonia during the dissolving or dispersing step so that the resulting solution or dispersion has a pH value of 6.0 to 8.5, with the proviso that the percentages mentioned add up to 100, the quantitative ratio of the reactants a), b) and c) used corresponds to an NCO:OH equivalent ratio of 0.5:1 to 1:1 and is otherwise selected within the stated limits so that the resulting oligourethanes have the content of groups (i) and (ii) mentioned in claim 1.

**Revendications**

**1.** Utilisation de solutions ou dispersions aqueuses d'oligo-uréthannes présentant des groupements (méth)acryloyle qui présentent

i) une teneur en doubles liaisons sous la forme de groupements (méth)acryloyle, calculée en tant que $=C=C=$ (masse moléculaire $= 24$), comprise entre 3 et 15 % en masse et

ii) pour une valeur de pH des solutions ou dispersions aqueuses comprise entre 6,0 et 8,5, une teneur en groupements carboxyle neutralisés au moins partiellement par de l'ammoniac qui correspond à un indice d'acide des oligo-uréthannes compris entre 20 et 100,

en tant que préparation ou pour la préparation de produits de revêtement aqueux, durcissables par voie radicalaire.

**2.** Solutions ou dispersions aqueuses, qui conviennent pour l'utilisation selon la revendication 1, d'oligo-uréthannes présentant des groupements (méth)acryloyle, caractérisées en ce qu'elles sont préparées pendant qu'on met à réagir

a) de 20 à 80 % en masse d'un constituant alcool présentant des groupements (méth)acryloyle, étant constitué d'au moins un alcool monoatomique, présentant des groupements (méth)acryloyle, de masse moléculaire comprise entre 116 et 1 000,

b) de 4,5 à 20 % en masse d'un acide 2,2-bis(hydroxyméthyl)alcanecarboxyliqueayant au moins 5 atomes de carbone et

c) de 15 à 75 % en masse d'un constituant polyisocyanate étant constitué d'au moins un polyisocyanate organique de masse moléculaire comprise entre 168 et 1 000,

dans une réaction en récipient unique, le cas échéant en présence d'un solvant organique inerte, de telle sorte qu'on introduit les composants a) et b), qu'on homogénéise le cas échéant en ajoutant un solvant organique inerte et qu'on met à réagir avec le composant c) à une température comprise entre 50 et 100°C, le cas échéant en ajoutant un catalyseur approprié, jusqu'à ce que le mélange réactionnel ne contienne plus de groupements isocyanate, qu'on dissout ou disperse ensuite le mélange réactionnel dans de l'eau, étant entendu que, lors du processus de dissolution ou de dispersion, les groupements carboxyle sont au moins partiellement neutralisés par ajout d'ammoniac de sorte que la solution ou dispersion résultante présente une valeur de pH comprise entre 6,0 et 8,5, à condition que le pourcentage cité donne un total de 100, que la proportion des corps réagissants a), b) et c) utilisés corresponde à un rapport équivalent de NCO/OH compris entre 0,5 : 1 et 1 : 1 et qu'elle soit par ailleurs choisie conformément aux indications faites que les oligo-uréthannes résultants présentent la teneur citée dans la revendication 1 en groupements (i) et (ii).